(19)

Europäisches
Patentamt
European
Patent Office
Office européen
des brevets

(11) **EP 4 661 420 A1**

(12) **EUROPEAN PATENT APPLICATION**
published in accordance with Art. 153(4) EPC

(43) Date of publication:
**10.12.2025 Bulletin 2025/50**

(21) Application number: **24752798.9**

(22) Date of filing: **02.02.2024**

(51) International Patent Classification (IPC):
**H04Q 11/00** (2006.01)

(52) Cooperative Patent Classification (CPC):
**H04L 5/00; H04Q 11/00**

(86) International application number:
**PCT/CN2024/075418**

(87) International publication number:
**WO 2024/164942 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.02.2023 CN 202310132597**

(71) Applicants:
• **CHINA MOBILE COMMUNICATION CO., LTD
RESEARCH INSTITUTE
Beijing 100053 (CN)**
• **CHINA MOBILE COMMUNICATIONS GROUP CO.,
LTD.
Beijing 100032 (CN)**

(72) Inventors:
• **LIU, Sheng
Beijing 100032 (CN)**
• **LI, Yunbo
Beijing 100032 (CN)**
• **ZHANG, Dechao
Beijing 100032 (CN)**
• **LI, Han
Beijing 100032 (CN)**
• **WANG, Dong
Beijing 100032 (CN)**

(74) Representative: **J A Kemp LLP
80 Turnmill Street
London EC1M 5QU (GB)**

(54) **TRANSMISSION METHOD AND APPARATUS, AND OPTICAL COMMUNICATION DEVICE AND
STORAGE MEDIUM**

(57)    Provided in the embodiments of the present disclosure are a transmission method and apparatus, and an optical communication device and a storage medium. The method comprises: a first device multiplexing or mapping a first frame to a second frame, and sending the second frame, wherein the second frame comprises a first parameter and does not comprise a second parameter, and the first parameter represents an m-bit customer data count; and the second parameter represents a difference between an n-bit customer data count and (m/n)*Cm.

The first device multiplexes or maps a first frame to a second frame, and transmits the second frame. The second frame includes a first parameter and does not include a second parameter. The first parameter represents a number of m-bit client data entities — 101

**FIG. 1**

## Description

CROSS-REFERENCE TO RELATED APPLICATION

This application claims priority of Chinese patent application No. 202310132597.4 filed on February 6, 2023, the content of which is incorporated herein by reference in its entirety.

TECHNICAL FIELD

The disclosure relates to the technical field of optical communications, and in particular to a method and apparatus for transmission, an optical communication device, and a storage medium.

BACKGROUND

During transmission of service data through an Optical Transport Network (OTN), each intermediate node needs to recover a clock or a frequency of the service data. At present, the frequency of the service data needs to be recovered through a low-pass phase-locked loop, which consumes a lot of hardware resources.

SUMMARY

In order to solve the technical problem existing in the related art, embodiments of the disclosure provide a method and apparatus for transmission, an optical transmission device and a storage medium.

To achieve the above purpose, the technical solution of the embodiments of the disclosure is implemented as follows:

In a first aspect, embodiments of the disclosure provide a method for transmission, applied to a first device, and including: multiplexing or mapping, by the first device, a first frame to a second frame, and transmitting, by the first device, the second frame; wherein the second frame includes a first parameter and does not include a second parameter, the first parameter represents a number of m-bit client data entities, and the second parameter represents a difference between a number of n-bit client data entities and

$$\frac{m}{n} \times C_m.$$

In the above solution, the first parameter is placed or filled in an overhead part of the second frame.

In a second aspect, embodiments of the disclosure provide a method for transmission, applied to a second device, and including: receiving, by the second device, a second frame, wherein the second frame includes a first parameter and does not includes a second parameter, the first parameter represents a number of m-bit client data entities, and the second parameter represents a difference between a number of n-bit client data entities and $\frac{m}{n} \times C_m$.

In the above scheme, the method further includes: determining a first phase offset of the second frame resulted after passing through the second device, wherein the first phase offset includes a phase offset of the second frame resulted by passing through the second device, or an accumulated phase offset of the second frame resulted by passing through the second device and at least one further second device.

In the above scheme, the method further includes: calculating the first parameter, and placing or filling the first parameter into the second frame, to obtain a processed second frame including the first phase offset and the calculated first parameter.

In the above scheme, the method further includes: transmitting the processed second frame.

In the above scheme, receiving, by the second device, the second frame includes: receiving, by the second device, the second frame transmitted by a first device.

In the above scheme, determining the first phase offset of the second frame resulted after passing through the second device includes: obtaining a second phase offset between a first phase and a second phase, wherein the first phase represents a phase of the received second frame, and the second phase represents a phase of a local clock of the second device or a phase of the second frame to be transmitted; and determining the second phase offset as the first phase offset.

In the above scheme, receiving, by the second device, the second frame includes: receiving, by the second device, the second frame transmitted by one of the at least one further second device, wherein the second frame transmitted by the further second device originates from a first device, and includes a third phase offset, and the third phase offset represents an accumulated phase offset of the second frame resulted by passing through the at least one further second device.

In the above scheme, determining the first phase offset of the second frame resulted after passing through the second device includes: obtaining a second phase offset between a first phase and a second phase, wherein the first phase represents a phase of the received second frame, and the second phase represents a phase of a local clock of the second device or a phase of a second frame to be transmitted; and determining the first phase offset according to the second phase offset and the third phase offset.

In the above scheme, the method further includes: demultiplexing or demapping the second frame to a first frame, and adding the first phase offset to an overhead part of the first frame; and mapping or multiplexing the first frame to a second frame.

In a third aspect, embodiments of the disclosure further provide a method for transmission, applied to a third device, and including: receiving, by the third device, a second frame from a second device, wherein the second frame includes a first parameter and does not include a second parameter; the first parameter represents a number of m-bit client data entities; the second parameter represents a difference between a number of n-bit client data entities and $\frac{m}{n} \times C_m$; and the second frame further includes a first phase offset, and the first phase offset represents a phase offset path of the second frame resulted after passing through all second device(s) including the second device; and processing the second frame based on the first parameter to obtain a first frame, and obtaining clock information or frequency information of the first frame based on the first phase offset.

In the above scheme, processing the second frame based on the first parameter to obtain the first frame includes: demapping or demultiplexing the second frame to the first frame through the first parameter.

In a fourth aspect, embodiments of the disclosure further provide an apparatus for transmission, applied to a first device, and including a first processing unit and a first communication unit, wherein the first processing unit is configured to multiplex or map a first frame to a second frame, wherein the second frame includes a first parameter and does not include a second parameter, the first parameter represents a number of m-bit client data entities, and the second parameter represents a difference between a number of n-bit client data entities and $\frac{m}{n} \times C_m$; and the first communication unit is configured to transmit the second frame.

In a fifth aspect, embodiments of the disclosure further provide an apparatus for transmission, applied to a second device, and including: a second communication unit, configured to receive a second frame, wherein the second frame includes a first parameter and does not include a second parameter, the first parameter represents a number of m-bit client data entities, and the second parameter represents a difference between a number of n-bit client data entities and $\frac{m}{n} \times C_m$.

In a sixth aspect, embodiments of the disclosure further provide an apparatus for transmission, applied to a third device, and including: a third communication unit and a third processing unit; wherein the third communication unit is configured to receive a second frame from a second device, wherein the second frame includes a first parameter and does not include a second parameter; the first parameter represents a number of m-bit client data entities; the second parameter represents a difference between a number of n-bit client data entities and $\frac{m}{n} \times C_m$; and the second frame further includes a first phase offset, and the first phase offset represents an accumulated phase offset of the second frame resulted after passing through all second device(s) including the second device; and the third processing unit is configured to process the second frame based on the first parameter to obtain a first frame, and obtain clock information or frequency information of the first frame based on the first phase offset.

In a seventh aspect, embodiments of the disclosure provide a computer-readable storage medium having stored thereon a computer program that, when executed by a processor, causes the processor to implement the steps of the method for transmission in the first aspect, the second aspect, or the third aspect above.

In an eighth aspect, embodiments of the disclosure provide an optical communication device, including a memory, a processor, and a computer program that is stored in the memory and is capable of being run on the processor. The processor executes the computer program to implement the steps of the method for transmission in the first aspect, the second aspect, or the third aspect above.

In the method and apparatus for transmission, an optical transmission device and a storage medium according to the embodiments of the disclosure, the method includes that: a first device multiplexes or maps a first frame to a second frame, and transmits the second frame. The second frame includes a first parameter and does not include a second parameter, the first parameter represents a number of m-bit client data entities, and the second parameter represents a difference between a number of n-bit client data entities and $\frac{m}{n} \times C_m$. A second device transmits a second frame. A third device receives the second frame transmitted by the second device, processes the second frame based on the first parameter to obtain a first frame, and obtains clock information or frequency information of the first frame based on the first phase offset. According to the technical solution of the embodiments of the disclosure, a specific mapping or a multiplexing manner is used. On the one hand, the receiving end can implement data recovery merely with the first parameter being carried but without the second parameter; on the other hand, each intermediate node (second device) can recover frequency information of a data frame without using a low-pass phase-locked loop, thereby reducing hardware consumption.

BRIEF DESCRIPTION OF THE DRAWINGS

FIG. 1 illustrates a first schematic flowchart of a method for transmission according to embodiments of the disclosure.

FIG. 2 illustrates a second schematic flowchart of a method for transmission according to embodiments of the disclosure.

FIG. 3 illustrates a third schematic flowchart of a method for transmission according to embodiments of the disclosure.

FIG. 4A and FIG. 4B illustrate schematic diagrams of transmission of a method for transmission according to embodiments of the disclosure.

FIG. 5 illustrates a first schematic structural diagram of composition of an apparatus for transmission according to embodiments of the disclosure.

FIG. 6 illustrates a second schematic structural diagram of composition of an apparatus for transmission according to embodiments of the disclosure.

FIG. 7 illustrates a third schematic structural diagram of composition of an apparatus for transmission according to embodiments of the disclosure.

FIG. 8 illustrates a schematic structural diagram of hardware composition of an optical communication device according to embodiments of the disclosure.

DETAILED DESCRIPTION

The disclosure is further described in detail in conjunction with the accompanying drawings and particular embodiments.

The technical solution of the embodiments of the disclosure may be applied to various communication systems, for example, a global system of mobile communication (GSM) system, a long-term evolution (LTE) system, a 5th generation mobile communication technology (5G) system or the like. Optionally, the 5G system or 5G network may also be referred to as a new radio (NR) system, an NR network, an optical transmission network or the like.

Exemplarily, the communication system to which the embodiments of the disclosure are applied may include a network device and a terminal device (or may be referred to as a terminal, a communication terminal or the like). The network device may be a device communicating with the terminal device. The network device can provide communication coverage for a specific area, and can communicate with the terminal within the coverage. Optionally, the network device may be a base station in various communication systems, for example an evolutional NodeB (eNB) in an LTE system, or a next generation Node B (gNB) in a 5G system or NR system.

It is to be understood that devices having a communication function in the network/system in the embodiments of the disclosure may be referred to as a communication device. The communication device may include a network device and a terminal that have a communication function. The network device and the terminal device may be particular devices described above, which will not be described herein again. The communication devices may further include other devices in the communication system, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example, A and/or B may represent following three cases: existence of A alone, existence of both A and B, and existence of B alone. Additionally, the character "/" generally indicates that the contextual objects are in an "or" relationship.

The terms "first", "second", etc. in the description and claims of the disclosure are used to distinguish similar objects, and do not necessarily describe a specific sequence or ranking order. It should be understood that such used terms may be interchangeable where appropriate so that the embodiments of the disclosure described herein, for example, can be implemented in an order other than those depicted or described herein. In addition, the terms "comprise/include" and "have" and any variants thereof are intended to cover non-exclusive inclusion. For example, a process, method, system, product or device containing a series of steps or units is not necessarily limited to those steps or units clearly listed, and can include other steps or units not clearly listed or inherent to the process, method, system, product or device.

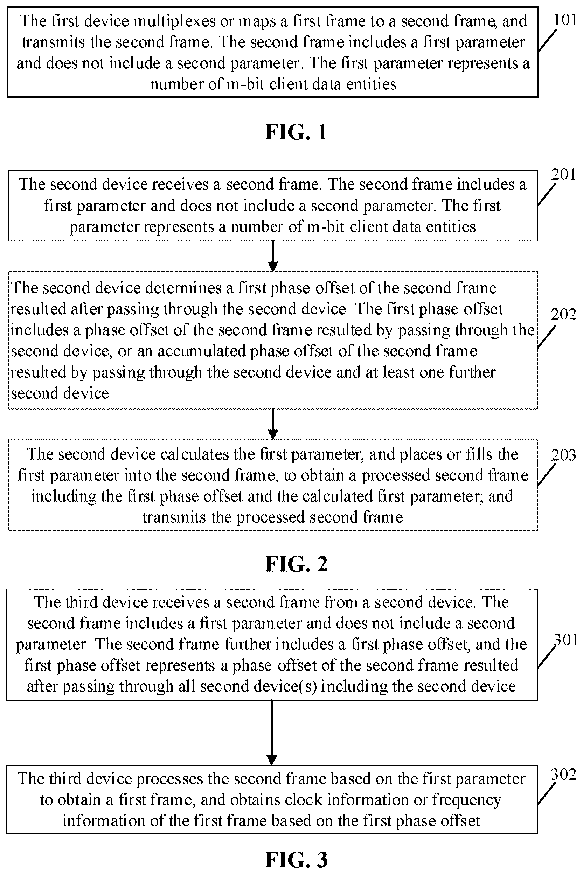

Embodiments of the disclosure provide a method for transmission. FIG. 1 illustrates a first schematic flowchart of a method for transmission according to embodiments of the disclosure. As illustrated in FIG. 1, the method includes following operations.

At 101, the first device multiplexes or maps a first frame to a second frame, and transmits the second frame.

The second frame includes a first parameter and does not include a second parameter. The first parameter represents a number of m-bit client data entities. The second parameter represents a difference between a number of n-bit client data entities and

$$\frac{m}{n} \times C_m .$$

In this embodiment, the first device multiplexes or maps the first frame to the second frame. The multiplexing or mapping may be equivalent to multiplexing (MUX), multiplexing mapping, mapping, mapping and multiplexing or the like, and the above processing names may be equivalent to each other or interchanged as necessary.

In this embodiment, the first device maps or multiplexes service data to a first frame in a conventional mapping or multiplexing manner, and then maps or multiplexes the first frame to a second frame in the mapping or multiplexing manner according to the embodiments of the disclosure, and transmits the second frame to a second device. The conventional mapping or multiplexing manner may be a generic mapping procedure (GMP), and includes a first parameter and a second parameter. However, when the mapping or multiplexing manner according to the embodiments of the disclosure is used, only a first parameter is included and no second parameter is included, and the second frame carries only the first parameter.

In some optional embodiments, the first parameter is Cm, representing the number of m-bit client data entities, and the second parameter is CnD, representing a difference between the number of n-bit client data entities and $\frac{m}{n} \times C_m$ (difference between Cn and (m/n×Cm)), where Cn represents the number of n-bit client data entities, and both m and n are positive integers.

The first device is a starting device in a data transmission process, and may also be referred to as a source node, a source device, or the like.

In some optional embodiments, the first parameter is placed or filled in an overhead part of the second frame.

A specific mapping or a multiplexing manner is used in the technical solution of the embodiments of the disclosure. On one hand, a receiving end can implement data recovery merely with the first parameter being carried but without the second parameter being carried; on the other hand, the intermediate node (second device) can recover frequency information of a data frame without using a low-pass phase-locked loop, thereby reducing hardware consumption.

In some examples, an Optical Service Unit (OSU) mechanism or a fine grain OTN (fgOTN) mechanism is introduced in the OTN to support 10M to 10G fine grain services. For example, service data is firstly mapped into an OSU frame (or a fine grain ODU (fgODU)/fine grain ODU flexible (fgODUflex) frame). The OSU frame (or a fgODU/fgODUflex frame) is then encapsulated into an Optical Channel Payload Unit (OPU) frame (or, the OSU (or fgODU/fgODUflex) frame is multiplexed/mapped to an Optical Data Tributary Unit (OSTU) frame (or a fine grain OSTU frame), and the OSTU frame (or the fgODTU frame) is then multiplexed/mapped to the OPU frame), and the OPU frame is then multiplexed/mapped to an Optical Data Unit (ODU) frame, and the like. Then in some optional embodiments, the first frame may also be referred to as an OSU frame, a sub-1G frame, a fgODUflex frame, a fgODU frame, or the like. The name of the first frame is not limited in the embodiments of the disclosure. The second frame may also be referred to as an ODU frame, an OSTU frame, a fgODTU frame, an OPU frame, or the like. The name of the second frame is not limited in the embodiments of the disclosure. Optionally, in the embodiments of the disclosure, multiplexing may also be equivalent to multiplexing (which may be abbreviated as MUX), mapping may also be equivalent to mapping, and multiplexing and mapping may also be equivalent to mapping and multiplexing.

Embodiments of the disclosure further provide a method for transmission. FIG. 2 illustrates a second schematic flowchart of a method for transmission according to embodiments of the disclosure. As illustrated in FIG. 2, the method includes following operations.

At operation 201, the second device receives a second frame. The second frame includes a first parameter and does not include a second parameter. The first parameter represents a number of m-bit client data entities, and the second parameter represents a difference between a number of n-bit client data entities and $\frac{m}{n} \times C_m$.

In this embodiment, the second device is an intermediate device in a data transmission process, and may also be referred to as an intermediate node, an intermediate device, or the like. The second device in this embodiment may be any one of multiple intermediate devices. Namely the operation that the second device receives the second frame may include the following two cases.

As a first implementation, the operation that the second device receives the second frame includes: the second device receives the second frame transmitted by the first device.

As a second implementation, the operation that the second device receives the second frame includes: the second device receives the second frame transmitted by one of at least one further second device. The second frame originates from the first device, and includes a third phase offset. The third phase offset represents an accumulated phase offset of the second frame resulted by passing through the at least one further second device.

In some optional embodiments, the method further includes following:

At operation 202, the second device determines a first phase offset of the second frame resulted after passing through the second device. The first phase offset includes a phase offset of the second frame resulted by passing through the second device, or an accumulated phase offset of the second frame resulted by passing through the second device and at least one further second device.

Optionally, the method may further include operation 203: the second device calculates the first parameter, and places or fills the first parameter into the second frame, to obtain a processed second frame including the first phase offset and the calculated first parameter; and transmits the processed second frame.

In the first implementation described above, the second device, as a starting intermediate node, directly receives the second frame transmitted by the first device, and further determines the first phase offset according to the received second frame. In this case, the determined first phase offset represents the phase offset of the second frame resulted by passing through the second device. In the second implementation described above, the second device, as a non-starting intermediate node, receives the second frame via one or more further second devices, and further determines the first phase offset based on the received second frame. In this case, the determined first phase offset represents an accumulated phase offset of the second frame resulted by passing through the second device and the one or more further second devices.

Based on the first implementation described above, in some optional embodiments, the operation of determining the first phase offset of the second frame resulted after passing through the second device includes: a second phase offset between a first phase and a second phase is obtained, and the second phase offset is determined as the first phase offset. The first phase represents a phase of the received second frame, and the second phase represents a phase of a local clock of the second device or a phase of the second frame to be transmitted.

In this embodiment, since the second device is the starting intermediate node or intermediate device, the second device directly compares the first phase of the received second frame with the phase of the local clock to calculate a phase offset (denoted as the second phase offset), or compares the first phase of the received second frame with the phase of the second frame to be transmitted (the phase of the local clock and the phase of the second frame to be transmitted or outputted have a same clock domain, have a same frequency and are phase-synchronous with each other) to calculate a phase offset (denoted as the second phase offset), and determines the calculated phase offset (denoted as the second phase offset) as the first phase offset. Further, the calculated first phase offset is inserted, placed, or filled into the second frame to be transmitted.

Based on the second implementation described above, in some optional embodiments, the operation of determining the first phase offset of the second frame resulted after passing through the second device includes: a second phase offset between a first phase and a second phase is obtained, and the first phase offset is determined according to the second phase offset and the third phase offset. The first phase represents a phase of the received second frame, and the second phase represents a phase of a local clock of the second device or a phase of the second frame to be transmitted.

In this embodiment, since the second device is a non-starting intermediate node or intermediate device, the second device receives the second frame via at least one further second device, and thus the received second frame includes a third phase offset. The third phase offset includes an accumulated phase offset of the second frame resulted by passing through the at least one further second device. For example, if the second frame, after being transmitted by the first device, reaches the second device after passing through two further second devices, the second frame received by the second device may include an accumulated phase offset of the second frame resulted by passing through the two further second devices. On one hand, the second device compares the first phase of the received second frame with the phase of the local clock to calculate a phase offset (denoted as the second phase offset), or compares the first phase of the received second frame with the phase of the second frame to be transmitted (the phase of the local clock and the phase of the second frame to be transmitted are same) to calculate a phase offset (denoted as the second phase offset), and further sums the above second phase offset and the third phase offset carried in the second frame to obtain the first phase offset. Further, the calculated first phase offset is inserted, placed, or filled into the second frame to be transmitted.

In some optional embodiments, in the above first implementation, that is, in the case that the second device receives the second frame transmitted by the first device, the second frame may also include a field carrying the third phase offset, but no information is placed or filled in the field, or a value is placed or filled in the field to indicate the third phase offset is 0.

In some optional embodiments, the operation of processing the second frame includes: the second frame is demultiplexed or demapped to a first frame, and the first phase offset is added to an overhead part of the first frame; and the first frame is mapped or multiplexed to a second frame.

In this embodiment, after receiving the second frame, the second device buffers the received second frame; and in this process, the phase of the second frame is converted from the phase of the local clock of a previous device to the phase of the local clock of the second device. Further, the second device demultiplexes or demaps the second frame into a first frame under the local clock of the second device, adds the first phase offset to an overhead part of the first frame. Optionally, the second device may perform crossing on the first frame to obtain the processed first frame, then maps or multiplexes the first frame or the processed first frame to a second frame which is then transmitted. Optionally, the above demultiplexing or demapping may also be equivalent to demultiplexing (which may be abbreviated as DMUX), demultiplexing mapping, demapping, demapping and demultiplexing, or the like. The above multiplexing or mapping may also be equivalent to multiplexing (which may be abbreviated as MUX), multiplexing mapping, mapping, mapping and multiplexing, or the like.

In this embodiment, the second device calculates the first parameter according to the rate of the first frame and the rate of the second frame.

In some optional embodiments, the first parameter is Cm, representing the number of m-bit client data entities, and the second parameter is CnD, representing a difference between the number of n-bit client data entities and $\frac{m}{n} \times C_m$ (difference between Cn and (m/n×Cm)), where Cn represents the number of n-bit client data entities, and both m and n are positive integers.

Based on the above embodiment, embodiments of the disclosure further provide a method for transmission. FIG. 3 illustrates a second schematic flowchart of a method for transmission according to embodiments of the disclosure. As illustrated in FIG. 3, the method includes following operations.

At operation 301, the third device receives a second frame from a second device. The second frame includes a first parameter and does not include a second parameter. The first parameter represents a number of m-bit client data entities. The second parameter represents a difference between a number of n-bit client data entities and $\frac{m}{n} \times C_m$. The second frame further includes a first phase offset, and the first phase offset represents a phase offset of the second frame resulted after passing through all second device(s) including the second device.

At operation 302, the third device processes the second frame based on the first parameter to obtain a first frame, and obtains clock information or frequency information of the first frame based on the first phase offset.

In some optional embodiments, the operation of processing the second frame is processed based on the first parameter to obtain the first frame includes: the second frame is demapped or demultiplexed to the first frame by the first parameter.

In this embodiment, the third device receives the second frame from the second device. On the one hand, the third device recovers and obtains the data of the first frame according to the first parameter carried in the second frame. Specifically, the third device recovers and obtains the data of the first frame according to the first parameter by using the demapping or demultiplexing processing according to the embodiments of the disclosure. Optionally, the above demultiplexing or demapping may also be equivalent to demultiplexing (which may be abbreviated as DMUX), demultiplexing mapping, demapping, or demapping and demultiplexing, or the like.

In some optional embodiments, the first parameter is Cm, representing the number of m-bit client data entities, and the second parameter is CnD, representing a difference between the number of n-bit client data entities and $\frac{m}{n} \times C_m$ (difference between Cn and (m/n×Cm)), where Cn represents the number of n-bit client data entities, and both m and n are positive integers. On the other hand, the third device obtains clock information or frequency information of the first frame is obtained based on the first phase offset carried in the second frame. Exemplarily, a derivative of the first phase offset is solved to obtain the clock information or the frequency information of the first frame.

The method for transmission according to embodiments of the disclosure is described in detail hereinafter in conjunction with particular examples. In this example, description is made with a first device being a source node (or referred to as an OSU source network element (NE)), a second device being an intermediate node (or referred to as an OSU Intermediate Switch), and a third device being a sink node (or referred to as an OSU SwitchSink NE) as an example.

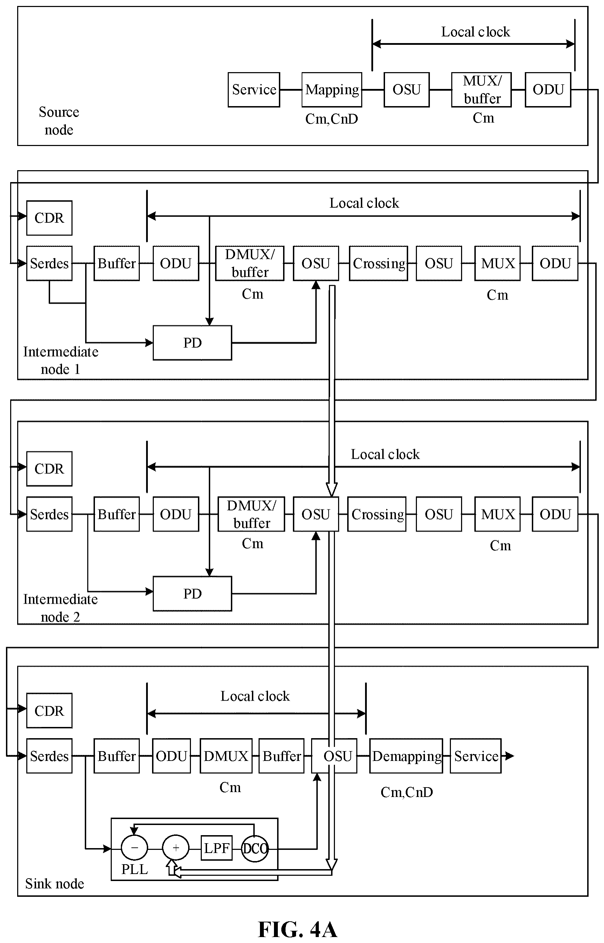

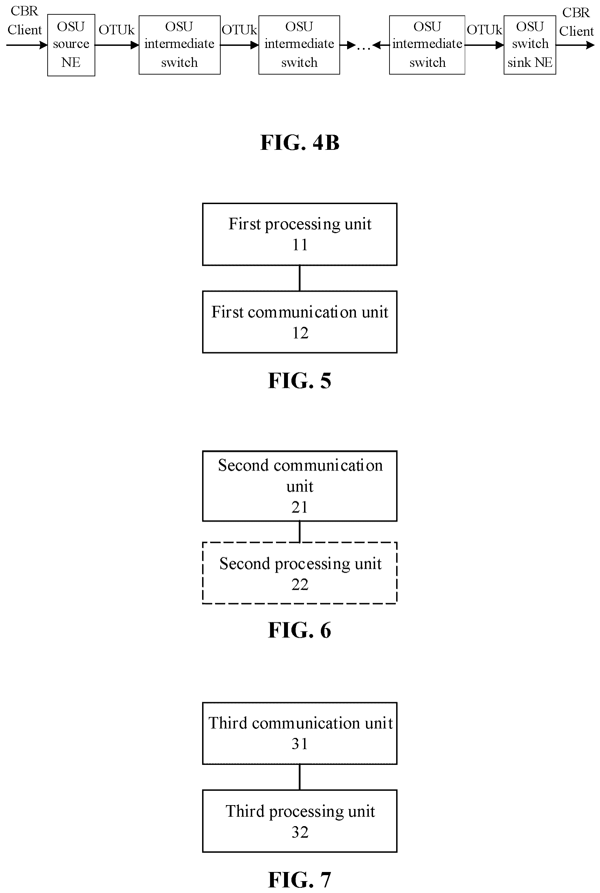

FIG. 4A and FIG. 4B illustrate schematic diagrams of transmission of a method for transmission according to embodiments of the disclosure. In FIG. 4A, the number of intermediate nodes being two is used as an example for description only; in actual applications, the number of intermediate nodes is not limited to two, which is not limited in this embodiment. Referring to FIG. 4A and FIG. 4B, a process of data transmission may be as follows.

At a source node, service data is mapped to an OSU through a traditional GMP. Such a mapping manner includes Cm and CnD. The OSU is mapped to an ODU in a special mapping manner according to the embodiments of the disclosure, and this special mapping manner only includes a Cm value (does not include the CnD). The source node transmits a second frame to an intermediate node 1.

The OSU is equivalent to the first frame in the above embodiments, and the ODU is equivalent to the second frame in the above embodiments.

At the intermediate node 1, a phase of an input signal (i.e., a phase of the received ODU, for example, denoted as "phase input") and a phase of a local clock (the local clock and the output signal have a same clock domain, a same frequency, and are phase-synchronous with each other, and the phase of the local clock is denoted as "phase output" for example) may be compared with each other by a phase differentiator (PD), to calculate a phase offset: phase offset 1 = phase output - phase input, and to calculate an accumulated phase offset: phase offset path = 0 + phase offset 1. The received ODU is demapped or demultiplexed (DMUX)/buffered to obtain the OSU, and then the accumulated phase offset "phase offset path" is placed into "overhead" part of a header of the OSU frame. Further, the OSU is subjected to crossing to obtain a processed OSU, and then the processed OSU is multiplexed to obtain a processed ODU. The processed ODU is transmitted.

At an intermediate node 2, a phase of an input signal (i.e., a phase of the received ODU, for example, denoted as "phase input") and a phase of a local clock (the local clock and the output signal have a same clock domain, a same frequency, and are phase-synchronous with each other, and the phase of the local clock is denoted as "phase output" for example) can be compared by a PD to calculate a phase offset: phase offset 2 = phase output - phase input, and to calculate an accumulated phase offset: phase offset path = phase offset 1 + phase offset 2. The received ODU is demapped or demultiplexed (DMUX)/buffered to obtain the OSU, and then the accumulated phase offset "phase offset path" is placed into "overhead" of a header of the OSU frame. Further, the OSU is subjected to crossing to obtain a processed OSU, and then the processed OSU is multiplexed to obtain a processed ODU. The processed ODU is transmitted.

Similar processing is carried out at each intermediate node, and the accumulated phase offset is calculated: phase offset path = phase offset 1 + phase offset 2 +... + phase offset N.

The sink node receives the ODU transmitted by an intermediate node, performs special demapping or demultiplexing through the accumulated phase offset "phase offset path" and Cm carried in the ODU, to recover data of the OSU through Cm, and uses a phase locked loop (PLL) to recover the clock frequency of the OSU through "phase offset path", thereby restoring or recovering the frequency information (or clock information) of the OSU and the OSU frame. Further, the OSU is demapped into service data by conventional GMP demapping.

As can be seen from the above example, in the process of data frame transmission, on the one hand, the receiving end can realize data recovery merely with Cm being carried but without the CnD; on the other hand, the clock information or the frequency information of the OSU can be recovered as long as each intermediate node carries an accumulated phase offset, and there is no need to use a low-pass phase-locked loop to recover the frequency information of the data frame, thus reducing hardware consumption.

Based on the above embodiments, embodiments of the disclosure further provide an apparatus for transmission. The apparatus is applied to a first device. FIG. 5 illustrates a first schematic structural diagram of composition of an apparatus for transmission according to embodiments of the disclosure. As illustrated in FIG. 5, the apparatus includes a first processing unit 11 and a first communication unit 12.

The first processing unit 11 is configured to multiplex or map a first frame to a second frame. The second frame includes a first parameter and does not include a second parameter. The first parameter represents a number of m-bit client data entities. The second parameter represents a difference between a number of n-bit client data entities and $\frac{m}{n} \times C_m$ .

The first communication unit 12 is configured to transmit the second frame.

In some optional embodiments of the disclosure, the first parameter is placed or filled in an overhead part of the second frame.

In the embodiments of the disclosure, the first processing unit 11 in the apparatus may be realized by a central processing unit (CPU), a digital signal processor (DSP), a microcontroller unit (MCU) or a field programmable gate array (FPGA) in practical applications. The first communication unit 12 in the apparatus may be realized by a communication module (containing such as a basic communication suite, an operating system, a communication module, a standardized interface and protocols) and a transceiving antenna in practical applications.

Embodiments of the disclosure further provide an apparatus for transmission. The apparatus is applied to a second device. FIG. 6 illustrates a second schematic structural diagram of composition of an apparatus for transmission according to embodiments of the disclosure. As illustrated in FIG. 6, the apparatus includes a second communication unit 21, configured to receive a second frame. The second frame includes a first parameter and does not include a second parameter. The first parameter represents a number of m-bit client data entities. The second parameter represents a difference between a number of n-bit client data entities and $\frac{m}{n} \times C_m$ .

In some optional embodiments of the disclosure, the apparatus further includes a second processing unit 22 configured to determine a first phase offset of the second frame resulted after passing through the second device. The first phase offset includes a phase offset of the second frame resulted by passing through the second device, or an accumulated phase offset of the second frame resulted by passing through the second device and at least one further second device .

In some optional embodiments of the disclosure, the second processing unit 22 is further configured to calculate the first parameter, and place or fill the first parameter into the second frame, to obtain a processed second frame including the first phase offset and the calculated first parameter.

In some optional embodiments of the disclosure, the second communication unit 21 is further configured to transmit the processed second frame.

In some optional embodiments of the disclosure, the second communication unit 21 is configured to receive the second frame transmitted by the first device.

In some optional embodiments of the disclosure, the second processing unit 22 is configured to: obtain a second phase offset between a first phase and a second phase, and determine the second phase offset as the first phase offset. The first phase represents a phase of the received second frame, and the second phase represents a phase of a local clock of the second device or a phase of a second frame to be transmitted.

In some optional embodiments of the disclosure, the second communication unit 21 is configured to receive the second frame transmitted by one of the at least one further second device. The second frame transmitted by the further second device originates from a first device, and includes a third phase offset. The third phase offset represents an accumulated phase offset of the second frame resulted by passing through the at least one further second device.

In some optional embodiments of the disclosure, the second processing unit 22 is configured to: obtain a second phase offset between a first phase and a second phase, and determine the first phase offset according to the second phase offset and the third phase offset. The first phase represents a phase of the received second frame, and the second phase represents a phase of a local clock of the second device or a phase of a second frame to be transmitted.

In some optional embodiments of the disclosure, the second processing unit 22 is configured to: demultiplex or demap the second frame to a first frame, and add the first phase offset to an overhead part of the first frame; and map or multiplex the first frame to a second frame.

In the embodiments of the disclosure, the second processing unit 22 in the apparatus may be realized by a CPU, a DSP, an MCU or an FPGA in practical applications. The second communication unit 21 in the apparatus may be realized by a communication module (containing such as a basic communication suite, an operating system, a communication module, a standardized interface and protocols) and a transceiving antenna in practical applications.

Embodiments of the disclosure further provide an apparatus for transmission. The apparatus is applied to a third device. FIG. 7 illustrates a third schematic structural diagram of composition of an apparatus for transmission according to embodiments of the disclosure. As illustrated in FIG. 7, the apparatus includes a third communication unit 31 and a third processing unit 32.

The third communication unit 31 is configured to receive a second frame from a second device. The second frame includes a first parameter and does not include a second parameter. The first parameter represents a number of m-bit client data entities. The second parameter represents a difference between a number of n-bit client data entities and $\frac{m}{n} \times C_m$. The second frame further includes a first phase offset. The first phase offset represents a phase offset of the second frame resulted after passing through all second device(s) including the second device.

The third processing unit 32 is configured to process the second frame based on the first parameter, to obtain a first frame, and obtain clock information or frequency information of the first frame based on the first phase offset.

In some optional embodiments of the disclosure, the third processing unit 32 is configured to demap or demultiplex the second frame to the first frame through the first parameter.

In the embodiments of the disclosure, the third processing unit 32 in the apparatus may be realized by a CPU, a DSP, an MCU or an FPGA in practical applications. The third communication unit 31 in the apparatus may be realized by a communication module (containing such as a basic communication suite, an operating system, a communication module, a standardized interface and protocols) and a transceiving antenna in practical applications.

It is to be noted that for the above apparatus for transmission according to the embodiments, the division of the program modules above is used as an example for description of the transmission only. In practical applications, the processing may be allocated to and accomplished by different program modules according to demands. Namely, the inner structure of the apparatus may be divided into different program modules to accomplish all or part of the processing described above. Additionally, the above apparatus for transmission according to the embodiments belong to the same concept as the method for transmission, and details of the particular implementation process of the apparatus may refer to the method embodiments, which will not be described here again.

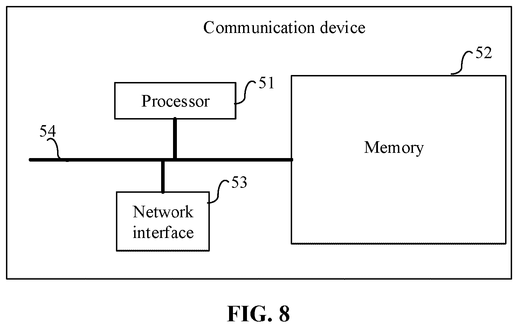

Embodiments of the disclosure further provide an optical communication device. The optical communication device may be the first device, the second device or the third device in above embodiments. FIG. 8 illustrates a schematic structural diagram of hardware composition of an optical communication device according to embodiments of the disclosure. As illustrated in FIG. 8, the communication device includes a memory 42, a processor 41, and a computer program that is stored in the memory 42 and is capable of being run on the processor 41. The processor 41 executes the computer program to implement the steps of the method for transmission applied to a first device, a second device or a third device.

Optionally, the communication device further includes at least one network interface 43. The components in the communication device are coupled together through a bus system 44. It may be understood that the bus system 44 is used for realizing the connection and communication between the components. Besides a data bus, the bus system 44 further includes a power bus, a control bus and a state signal bus. However, for clarity of description, the buses are all signed as the bus system 44 in FIG. 8.

It may be understood that the memory 42 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 42 described in the embodiments of the disclosure is intended to include but not limited to memories of these and any other suitable types.

The method disclosed in above embodiments of the disclosure may be applied to the processor 41, or may be implemented by the processor 41. The processor 41 may be an integrated circuit chip, and has the capability of signal processing. During implementation, the various steps of in the above method may be completed by an integrated logic circuit in hardware form or instructions in software form in the processor 41. The above processor 41 may be a general-purpose processor, a digital signal processor (DSP), or other programmable logic devices, discrete gates or transistor logic devices, discrete hardware components and so on. The processor 41 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is in the memory 42, and the processor 41 reads information from the memory 42 to implement steps of the above methods in combination with the hardware.

In an exemplary embodiment, the communication device may be implemented by one or more Application Specific Integrated Circuit (ASICs), DSPs, Programmable Logic Devices (PLDs), Complex Programmable Logic Devices (CPLDs), FPGAs, general-purpose processors, controllers, MCUs, Microprocessors, or other electronic elements, to execute the method above.

In an exemplary embodiment, embodiments of the disclosure further provide a computer-readable storage medium, for example the memory 42 including a computer program. The computer program may be executed by the processor 41 of the communication device, to accomplish the steps of the above method. The computer-readable storage medium may be such as a ferroelectroc random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM), or may be a device containing one or a combination of those memories.

The computer-readable storage medium according to the embodiments of the disclosure has stores thereon a computer program. The computer program, when executed by a processor, implement the steps of the method for transmission applied to a first device, a second device or a third device.

The methods disclosed in the method embodiments according to the disclosure may be combined arbitrarily without conflict, to obtain a new method embodiment.

The features disclosed in the product embodiments according to the disclosure may be combined arbitrarily without conflict, to obtain a new product embodiment.

The features disclosed in the method embodiments or device embodiments according to the disclosure may be combined arbitrarily without conflict, to obtain a new method embodiment or a new device embodiment.

In some embodiments provided in the disclosure, it is to be understood that the disclosed device and method may be implemented in other ways. The device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or may exist separately physically; or two or more units may be integrated in one unit. The integrated unit may be implemented in form of hardware, or may be implemented in form of hardware plus software functions.

Those of ordinary skill in the art may understand that all or some steps of the above method embodiment may be accomplished by hardware related to program instructions. The program described above may be stored in a computer-readable storage medium, and the program, when executed, implements the steps of the method embodiments. The foregoing storage medium includes various media capable of storing program codes such as a mobile hard disk drive, a read-only memory (ROM), a random access memory (RAM), a magnetic disc, or a compact disc (CD).

Alternatively, if implemented in form of software functional units and sold or used as independent product, the above integrated unit of the disclosure may also be stored in a computer-readable storage medium. Based on such understanding, the technical solution of the embodiments of the disclosure substantially or in part making contributions to the related art may be embodied in a software product. The computer software product is stored in a storage medium, and includes several instructions to enable a computer device (which may be a personal computer, a server, a network device or the like) to perform all or some of the method according to various embodiments of the disclosure. The foregoing storage medium includes various media capable of storing program codes such as a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for transmission, applied to a first device and comprising:

    multiplexing or mapping, by the first device, a first frame to a second frame, and transmitting, by the first device, the second frame;
    wherein the second frame comprises a first parameter and does not comprise a second parameter, the first parameter represents a number of m-bit client data entities, and the second parameter represents a difference between a number of n-bit client data entities and $\frac{m}{n} \times C_m$.

2. The method of claim 1, wherein the first parameter is placed or filled in an overhead part of the second frame.

3. A method for transmission, applied to a second device and comprising:
    receiving, by the second device, a second frame, wherein the second frame comprises a first parameter and does not comprise a second parameter, the first parameter represents a number of m-bit client data entities, and the second parameter represents a difference between a number of n-bit client data entities and $\frac{m}{n} \times C_m$.

4. The method of claim 3, further comprising:
    determining a first phase offset of the second frame resulted after passing through the second device, wherein the first phase offset comprises a phase offset of the second frame resulted by passing through the second device, or an accumulated phase offset of the second frame resulted by passing through the second device and at least one further second device.

5. The method of claim 4, further comprising:
    calculating the first parameter, and placing or filling the first parameter into the second frame, to obtain a processed second frame comprising the first phase offset and the calculated first parameter.

6. The method of claim 5, further comprising:
    transmitting the processed second frame.

7. The method of claim 4, wherein receiving, by the second device, the second frame comprises:
    receiving, by the second device, the second frame transmitted by a first device.

8. The method of claim 7, wherein determining the first phase offset of the second frame resulted after passing through the second device comprises:

    obtaining a second phase offset between a first phase and a second phase, wherein the first phase represents a phase of the received second frame, and the second phase represents a phase of a local clock of the second device or a phase of a second frame to be transmitted; and determining the second phase offset as the first phase offset.

9. The method of claim 4, wherein receiving, by the second device, the second frame comprises:
    receiving, by the second device, the second frame transmitted by one of the at least one further second device, wherein the second frame transmitted by the further second device is from a first device, and comprises a third phase offset, and the third phase offset represents an accumulated phase offset of the second frame resulted by passing through the at least one further second device.

10. The method of claim 9, wherein determining the first phase offset of the second frame resulted after passing through the second device comprises:

    obtaining a second phase offset between a first phase and a second phase, wherein the first phase represents a phase of the received second frame, and the second phase represents a phase of a local clock of the second device or a phase of a second frame to be transmitted; and determining the first phase offset according to the second phase offset and the third phase offset.

11. The method of claim 5, further comprising:

demultiplexing or demapping the second frame to a first frame, and adding the first phase offset to an overhead part of the first frame; and

mapping or multiplexing the first frame to a second frame.

12. A method for transmission, applied to a third device and comprising:

receiving, by the third device, a second frame from a second device, wherein the second frame comprises a first parameter and does not comprise a second parameter; the first parameter represents a number of m-bit client data entities; the second parameter represents a difference between a number of n-bit client data entities and $\frac{m}{n} \times C_m$ ; and the second frame further comprises a first phase offset, and the first phase offset represents an accumulated phase offset of the second frame resulted after passing through all second device(s) comprising the second device; and

processing the second frame based on the first parameter to obtain a first frame, and obtaining clock information or frequency information of the first frame based on the first phase offset.

13. The method of claim 12, wherein processing the second frame based on the first parameter to obtain the first frame comprises:
demapping or demultiplexing the second frame to the second frame by the first parameter.

14. An apparatus for transmission, applied to a first device, and comprising a first processing unit and a first communication unit, wherein

the first processing unit is configured to multiplex or map a first frame to a second frame, wherein the second frame comprises a first parameter and does not comprise a second parameter, the first parameter represents a number of m-bit client data entities, and the second parameter represents a difference between a number of n-bit client data entities and $\frac{m}{n} \times C_m$ ; and
the first communication unit is configured to transmit the second frame.

15. An apparatus for transmission, applied to a second device and comprising: a second communication unit, configured to receive a second frame, wherein the second frame comprises a first parameter and does not comprise a second parameter, the first parameter represents a number of m-bit client data entities, and the second parameter represents a difference between a number of n-bit client data entities and $\frac{m}{n} \times C_m$ .

16. An apparatus for transmission, applied to a third device, and comprising a third communication unit and a third processing unit; wherein

the third communication unit is configured to receive a second frame from a second device, wherein the second frame comprises a first parameter and does not comprise a second parameter;
the first parameter represents a number of m-bit client data entities; the second parameter represents a difference between a number of n-bit client data entities and $\frac{m}{n} \times C_m$ ; and the second frame further comprises a first phase offset, and the first phase offset represents an accumulated phase offset of the second frame resulted after passing through all second device(s) comprising the second device; and
the third processing unit is configured to process the second frame based on the first parameter to obtain a first frame, and obtain clock information or frequency information of the first frame based on the first phase offset.

17. A computer-readable storage medium having stored thereon a computer program that, when executed by a processor, causes the processor to implement the steps of the method of claim 1 or 2; or

the computer program, when executed by the processor, causes the processor to implement the steps of the method of any one of claims 3 to 11; or
the computer program, when executed by the processor, causes the processor to implement the steps of the method of claim 12 or 13.

18. An optical communication device, comprising a memory, a processor, and a computer program that is stored in the memory and is capable of being run on the processor, wherein the processor executes the computer program to implement the steps of the method of claim 1 or 2; or

the processor executes the computer program to implement the steps of the method of any one of claims 3 to 11; or
the processor executes the computer program to implement the steps of the method of claim 12 or 13.

The first device multiplexes or maps a first frame to a second frame, and transmits the second frame. The second frame includes a first parameter and does not include a second parameter. The first parameter represents a number of m-bit client data entities  — 101

## FIG. 1

The second device receives a second frame. The second frame includes a first parameter and does not include a second parameter. The first parameter represents a number of m-bit client data entities  — 201

The second device determines a first phase offset of the second frame resulted after passing through the second device. The first phase offset includes a phase offset of the second frame resulted by passing through the second device, or an accumulated phase offset of the second frame resulted by passing through the second device and at least one further second device  — 202

The second device calculates the first parameter, and places or fills the first parameter into the second frame, to obtain a processed second frame including the first phase offset and the calculated first parameter; and transmits the processed second frame  — 203

## FIG. 2

The third device receives a second frame from a second device. The second frame includes a first parameter and does not include a second parameter. The second frame further includes a first phase offset, and the first phase offset represents a phase offset of the second frame resulted after passing through all second device(s) including the second device  — 301

The third device processes the second frame based on the first parameter to obtain a first frame, and obtains clock information or frequency information of the first frame based on the first phase offset  — 302

## FIG. 3

**FIG. 4A**

```
CBR          OSU          OTUk      OSU          OTUk      OSU                     OSU          OTUk     OSU          CBR
Client  →   source  →               intermediate →        intermediate → ... ←   intermediate →        switch   →  Client
             NE                      switch                switch                  switch                sink NE
```

## FIG. 4B

```
┌─────────────────────────┐
│   First processing unit  │
│            11            │
└─────────────────────────┘
┌─────────────────────────┐
│ First communication unit │
│            12            │
└─────────────────────────┘
```

## FIG. 5

```
┌─────────────────────────┐
│   Second communication   │
│           unit           │
│            21            │
└─────────────────────────┘
┌ ─ ─ ─ ─ ─ ─ ─ ─ ─ ─ ─ ─ ┐
  Second processing unit
│           22            │
└ ─ ─ ─ ─ ─ ─ ─ ─ ─ ─ ─ ─ ┘
```

## FIG. 6

```
┌─────────────────────────┐
│ Third communication unit │
│            31            │
└─────────────────────────┘
┌─────────────────────────┐
│   Third processing unit  │
│            32            │
└─────────────────────────┘
```

## FIG. 7

Communication device

Processor 51

54

Memory 52

Network interface 53

**FIG. 8**

## INTERNATIONAL SEARCH REPORT

| International application No. |
| --- |
| **PCT/CN2024/075418** |

### A.    CLASSIFICATION OF SUBJECT MATTER

H04Q11/00(2006.01)i

According to International Patent Classification (IPC) or to both national classification and IPC

### B.    FIELDS SEARCHED

Minimum documentation searched (classification system followed by classification symbols)

IPC:H04Q

Documentation searched other than minimum documentation to the extent that such documents are included in the fields searched

Electronic data base consulted during the international search (name of data base and, where practicable, search terms used)

CNTXT, VCN, DWPI, CNKI, IEEE: 光, 映射, 复用, 客户, 累计, 相位差, 鉴相, 开销, optical, map+, client, phase, difference, PD, overhead, Cm, CnD, Cn

### C.    DOCUMENTS CONSIDERED TO BE RELEVANT

| Category* | Citation of document, with indication, where appropriate, of the relevant passages | Relevant to claim No. |
| --- | --- | --- |
| X | CN 114157383 A (ANHUI WANTONG POST AND TELECOMMUNICATIONS CO., LTD.) 08 March 2022 (2022-03-08)<br>claims 1-9 | 1-3, 14-15, 17-18 |
| A | CN 108242965 A (HUAWEI TECHNOLOGIES CO., LTD.) 03 July 2018 (2018-07-03)<br>entire document | 1-18 |
| A | US 2012014270 A1 (FUJITSU LIMITED) 19 January 2012 (2012-01-19)<br>entire document | 1-18 |
| A | 吴秋游 (WU QIUYOU). "面向多业务的OTN演进 (Multi-Services OTN Evolution)"<br>*邮电设计技术 (Designing Techniques of Posts and Telecommunications)*,<br>No. 9, 30 September 2010 (2010-09-30),<br>entire document | 1-18 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **15 April 2024** | **19 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2024/075418** |

| Patent document cited in search report | | | Publication date (day/month/year) | Patent family member(s) | | | Publication date (day/month/year) |
| --- | --- | --- | --- | --- | --- | --- | --- |
| CN | 114157383 | A | 08 March 2022 | None | | | |
| CN | 108242965 | A | 03 July 2018 | US | 2019312717 | A1 | 10 October 2019 |
| | | | | WO | 2018113539 | A1 | 28 June 2018 |
| | | | | EP | 3544210 | A1 | 25 September 2019 |
| | | | | IN | 201917022478 | A | 26 July 2019 |
| | | | | CN | 110445568 | A | 12 November 2019 |
| US | 2012014270 | A1 | 19 January 2012 | JP | 2012023647 | A | 02 February 2012 |

**EP 4 661 420 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310132597